# EUROPÄISCHE PATENTSCHRIFT

(11) **EP 3 567 195 B1**
(45) Veröffentlichungstag und Bekanntmachung des Hinweises auf die Patenterteilung: **30.03.2022**
(21) Anmeldenummer: 19168316.8
(22) Anmeldetag: 10.04.2019
(51) Int. Cl.: E05B 71/00, B62H 5/00, E05B 67/00, G07C 9/00

(54) **HANDSENDER FÜR EIN MOBILES SCHLOSS**
MANUAL TRANSMITTER FOR A MOBILE LOCK
ÉMETTEUR MANUEL POUR UNE SERRURE MOBILE

(30) Priorität: 11.05.2018 DE 102018111286
(43) Veröffentlichungstag der Anmeldung: 13.11.2019
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- WO-A1-2016/173804
- DE-A1-102006 010 436
- DE-A1-102011 001 226
- US-A1- 2016 217 637

## Beschreibung

Die vorliegende Erfindung betrifft einen Handsender zum Entriegeln eines elektrisch betätigbaren mobilen Schlosses.

Unter einem mobilen Schloss wird in diesem Kontext jede Art von Schloss verstanden, das nicht stationär in einem Gebäude oder in einem Kraftfahrzeug verbaut ist, sondern von einem abzuschließenden Objekt abgenommen werden kann, wie beispielsweise ein Hangschloss, Bügelschloss, Kabelschloss oder Bremsscheibenschloss. Darüber hinaus umfassen mobile Schlösser in diesem Kontext auch Rahmenschlösser oder Batteriefachschlösser, welche an Zwei- oder Dreirädern, insbesondere an Fahrrädern, angebracht sind. Derartige mobile Schlösser sind grundsätzlich bekannt.

Als elektrisch betätigbar wird ein mobiles Schloss bezeichnet, welches nicht über einen Schließzylinder verfügt, sondern stattdessen mittels eines Elektromotors entriegelt und gegebenenfalls auch verriegelt wird. Viele Nutzer wünschen sich die Möglichkeit zur Ansteuerung des mobilen Schlosses mittels eines Smartphones, einer Smartwatch oder dergleichen, welches bzw. welche sie ohnehin mit sich führen. Trotzdem existiert auch ein potentieller Nutzerkreis, welcher weder über ein Smartphone noch über eine Smartwatch verfügt und welcher dennoch nicht von einer Nutzung des elektrisch betätigbaren mobilen Schlosses ausgeschlossen werden soll.

US2016/217637 A1 offenbart einen Handsender, welcher die automatische Entriegelung eines Schlosses auslöst, sobald sich der Handsender innerhalb einer vorbestimmten Distanz zu dem Schloss befindet, wobei diese automatische Entriegelungseigenschaft durch den Nutzer ein- bzw. ausgeschaltet werden kann. Diese Dokument offenbart den Oberbegriff des Anspruchs 1.

Weiterer Stand der Technik ist aus DE 10 2011 001 226 A1, DE 10 2006 010 436 A1 und WO 2016/173804 A1 bekannt.

Der Erfindung liegt daher die Aufgabe zugrunde, die Nutzung eines elektrisch betätigbaren mobilen Schlosses auch ohne die Verwendung eines Smartphones oder einer Smartwatch komfortabler zu gestalten.

Zur Lösung der Aufgabe ist ein Handsender mit den Merkmalen des Anspruchs 1 vorgesehen.

Der erfindungsgemäße Handsender umfasst einen Energiespeicher, einen Bewegungssensor zur Detektion einer Bewegung des Handsenders, eine Sende/Empfangseinheit zum Aufbauen einer drahtlosen Verbindung zu einem elektrisch betätigbaren mobilen Schloss und ein Abfragemittel zur Abfrage des Ladezustands des Energiespeichers. Außerdem ist der Handsender zwischen einem manuellen Modus, in welchem der Verbindungsaufbau nur durch die Betätigung eines Betätigungselements durch einen Nutzer auslösbar ist, und einem Automatikmodus umschaltbar, in welchem der Verbindungsaufbau durch eine Bewegung des Handsenders auslösbar ist. Bei einer gewünschten Umschaltung aus dem manuellen Modus in den Automatikmodus ist eine Abfrage des Ladezustands des Energiespeichers vorgesehen. Im Falle eines unzureichenden Ladezustands wird eine Umschaltung in den Automatikmodus verhindert.

Der Erfindung liegt der allgemeine Gedanke zugrunde, mit dem Handsender gewissermaßen eine Fernbedienung zu schaffen, die als Alternative zu beispielsweise einem Smartphone oder einer Smartwatch eine Ansteuerung, d.h. Entriegelung und gegebenenfalls auch Verriegelung, des Schlosses aus einer gewissen Distanz ermöglicht. Je nach persönlicher Vorliebe des Nutzers kann dieser den Handsender in einem manuellen Modus betreiben, in welchem der Nutzer bewusst ein Betätigungselement, beispielsweise einen Taster, insbesondere einen Drucktaster oder Schiebetaster, betätigen muss, um eine Entriegelung des Schlosses zu bewirken. Oder der Nutzer schaltet den Handsender in einen Automatikmodus um, in welchem ein Entriegelungsvorgang für den Nutzer unbemerkt initiiert wird, gewissermaßen also im Hintergrund abläuft, wenn der Handsender bewegt wurde. Eine für den Verbindungsaufbau und Entriegelungsvorgang ausreichende Bewegung kann beispielsweise bereits dann vorliegen, wenn der Nutzer den Handsender in seiner Hosentasche trägt und auf das Schloss zugeht. Denkbar ist grundsätzlich aber auch eine geringere Detektionsempfindlichkeit des Bewegungssensors, welche beispielsweise erfordern kann, dass der Nutzer für die Auslösung des Verbindungsaufbaus und Entriegelungsvorgangs den Handsender stärker bewegen muss, beispielsweise durch stärkeres Schütteln oder Klopfen.

Sobald die drahtlose Verbindung zwischen dem Handsender und dem Schloss aufgebaut ist, können der Handsender und das Schloss Daten austauschen. Insbesondere können die von dem Handsender an das Schloss übermittelten Daten einen virtuellen Schlüssel und/oder eine Gerätekennung umfassen, mit deren Hilfe sich der den Handsender bei sich tragende Nutzer gegenüber dem Schloss authentisieren kann. Sofern die entsprechende Nutzerauthentifizierung auf Seiten des Schlosses erfolgreich absolviert wird, kann das Schloss einen Entriegelungsvorgang durchführen. Es versteht sich, dass in gleicher Weise grundsätzlich auch eine Verriegelung des Schlosses möglich ist.

Im Falle einer Auslösung des Verbindungsaufbaus durch Betätigung des Betätigungselements können die von dem Handsender an das Schloss übermittelten Daten außerdem ein Aktivierungssignal umfassen, um ein in einen energiesparenden Ruhezustand übergegangenes Schloss für den Verbindungsaufbau und die Nutzerauthentifizierung aufzuwecken.

Vorteilhafte Ausbildungen der Erfindung sind den Unteransprüchen, der Beschreibung und der Zeichnung zu entnehmen.

Gemäß einer Ausführungsform ist ein Umschaltelement zum Umschalten zwischen dem manuellen Modus und dem Automatikmodus vorgesehen. Dabei ist das Umschaltelement vorteilhafterweise durch das Betätigungselement gebildet. So kann die Umschaltung aus dem manuellen Modus in den Automatikmodus durch eine Betätigung des Betätigungselements für eine erste vorbestimmte Zeitdauer bewirkbar sein. Entsprechend kann auch die Umschaltung aus dem Automatikmodus in den manuellen Modus durch eine Betätigung des Betätigungselements für eine zweite vorbestimmte Zeitdauer bewirkbar sein. Bevorzugt liegen die erste und die zweite vorbestimmte Zeitdauer jeweils im Bereich von 5 Sekunden bis 15 Sekunden. Mit anderen Worten gehen die erste und zweite vorbestimmte Zeitdauer, für die das Betätigungselement zum Umschalten zwischen den Betriebsmodi betätigt werden muss, über eine Dauer hinaus, die gewöhnlich zum Betätigen eines Betätigungselements, beispielsweise Drücken eines Drucktasters, erforderlich ist, d.h. für das Umschalten zwischen den Betriebsmodi ist eine bewusste Handlung erforderlich. Dies trägt letztlich dazu bei, eine versehentliche Umschaltung zu vermeiden. Der Einfachheit halber können die erste und zweite vorbestimmte Zeitdauer gleich groß sein.

Der Handsender umfasst erfindungsgemäß ein Abfragemittel zur Abfrage des Ladezustands des Energiespeichers. Ein solches Abfragemittel ermöglicht es, bei einer gewünschten Umschaltung aus dem manuellen Modus in den Automatikmodus den Ladezustand des Energiespeichers abzufragen und im Falle eines unzureichenden Ladezustands eine Umschaltung in den Automatikmodus zu verhindern. Da im Automatikmodus jede durch den Bewegungssensor detektierte Bewegung einen Verbindungsaufbau auslösen, d.h. also die Sende/Empfangseinheit aktivieren kann, wird ein von einem Nutzer mit sich geführter Handsender im Automatikmodus regelmäßig deutlich mehr Energie verbrauchen als im manuellen Modus. Indem im Falle eines unzureichenden Ladezustands eine Umschaltung in den Automatikmodus verhindert wird, kann der Energiespeicher geschont werden und idealerweise verhindert werden, dass bei einem Entriegelungswunsch des Nutzers nicht mehr ausreichend Energie zur Verfügung steht, um eine Verbindung zu dem Schloss aufzubauen und einen Entriegelungsvorgang auszulösen.

Bevorzugt ist entsprechend bei Detektion einer Bewegung des im Automatikmodus befindlichen Handsenders eine Abfrage des Ladezustands des Energiespeichers und im Falle eines unzureichenden Ladezustands eine Umschaltung in den manuellen Modus vorgesehen, insbesondere ohne dass eine Verbindung zu dem Schloss aufgebaut wird. Das selbsttätige Umschalten in den manuellen Modus im Falle eines unzureichenden Ladezustands trägt ebenfalls zu einer Schonung des Energiespeichers bei und verhindert idealerweise, dass bei einem Entriegelungswunsch des Nutzers nicht mehr ausreichend Energie zur Verfügung steht, um eine Verbindung zu dem Schloss aufzubauen und einen Entriegelungsvorgang auszulösen.

Gemäß einer weiteren Ausführungsform ist auch im Automatikmodus durch eine Betätigung des Betätigungselements der Aufbau einer Verbindung zu dem Schloss auslösbar.

Im manuellen Modus und gegebenenfalls auch im Automatikmodus kann der Verbindungsaufbau durch eine Betätigung des Betätigungselements für eine dritte vorbestimmte Zeitdauer bewirkbar sein. Vorteilhafterweise ist die dritte vorbestimmte Zeitdauer kleiner als eine erste oder zweite vorbestimmte Zeitdauer, für die das Betätigungselement betätigt werden muss, um zwischen dem manuellen Modus und dem Automatikmodus umzuschalten. So liegt die dritte vorbestimmte Zeitdauer bevorzugt im Bereich von 20 ms bis 2 s.

Zur Schonung des Energiespeichers ist auch bei einer Betätigung des Betätigungselements im Automatikmodus für die dritte vorbestimmte Zeitdauer eine Abfrage des Ladezustands des Energiespeichers und im Falle eines unzureichenden Ladezustands eine Umschaltung in den manuellen Modus vorgesehen, insbesondere ohne dass eine Verbindung zu dem Schloss aufgebaut wird.

Es versteht sich, dass zur Schonung des Energiespeichers vorteilhafterweise der manuelle Modus die werksseitige Einstellung des Handsenders ist, d.h. der Handsender wird im manuellen Modus ausgeliefert und gegebenenfalls erst durch den Nutzer in den Automatikmodus umgeschaltet.

Damit der Nutzer des Handsenders rechtzeitig austauschen oder wieder aufladen kann, verfügt der Handsender gemäß einer weiteren vorteilhaften Ausführungsform über ein Ausgabemittel zur Ausgabe eines optischen und/oder akustischen Signals im Falle eines unzureichenden Ladezustands.

Die Verbindung zwischen dem Handsender und dem Schloss erfolgt bevorzugt nach dem Bluetooth-Standard, da sich dieser aufgrund seiner Reichweite und Universalität bewährt hat.

Weiterer Gegenstand der Erfindung ist ein Schließsystem umfassend einen Handsender der voranstehend beschriebenen Art und ein elektrisch betätigbares mobiles Schloss, welches eine Sende/Empfangseinheit aufweist, die den Aufbau einer drahtlosen Verbindung zwischen Schloss und Handsender ermöglicht. Durch das Schließsystem lassen sich die voranstehend erläuterten Vorteile entsprechend erreichen.

Gegenstand der Erfindung ist außerdem ein Verfahren mit den Merkmalen des Anspruchs 14, mit dessen Hilfe sich die voranstehend erläuterten Vorteile ebenfalls erreichen lassen.

Nachfolgend wird die Erfindung rein beispielhaft anhand einer möglichen Ausführungsform unter Bezugnahme auf die beigefügte Zeichnung beschrieben.

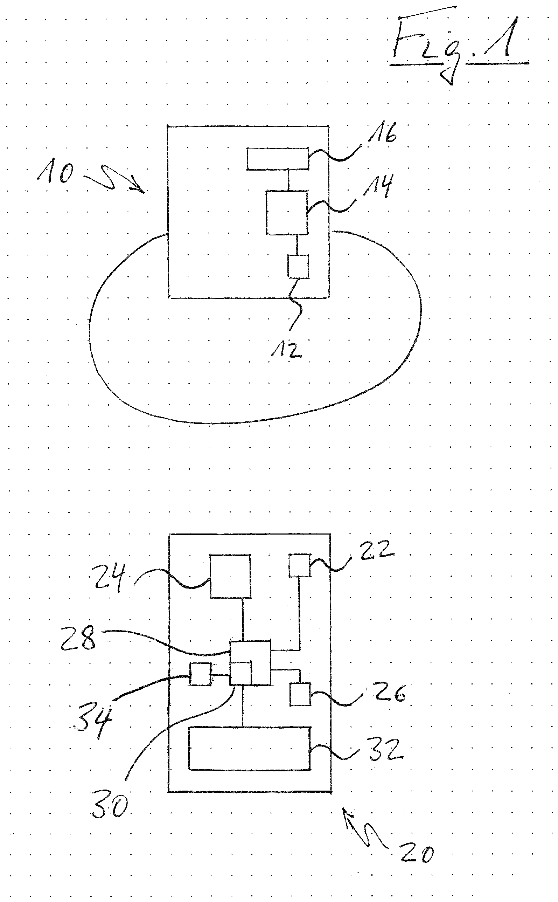

- Fig. 1: zeigt eine schematische Darstellung eines erfindungsgemäßen Schließsystems.

Das in Fig. 1 dargestellte Schließsystem umfasst ein elektrisch betätigbares mobiles Schloss 10, hier in Form eines Rahmenschlosses, welches an einem nicht gezeigten Fahrrad montiert ist. Das Schloss 10 weist eine Bluetooth-fähige Sende/Empfangseinheit 12 auf, sowie ein damit verbundenes Authentifizierungsmodul 14 zur Authentifizierung eines Nutzers des Schlosses 10 und einen mit dem Authentifizierungsmodul 14 verbundenen Elektromotor 16 zur Entriegelung des Schlosses 10 im Falle einer erfolgreichen Nutzerauthentifizierung.

Dem Schloss 10 ist ein Handsender 20 zugeordnet, welchen der Nutzer des Schlosses 10 mit sich führen kann und welcher zur Ansteuerung des Schlosses 10 aus der Entfernung dient. Der Handsender 20 weist hierfür seinerseits eine Bluetooth-fähige Sende/Empfangseinheit 22 auf sowie ein durch den Nutzer betätigbares Betätigungselement 24, einen Bewegungssensor 26 zur Detektion einer Bewegung des Handsenders 20 und eine mit der Sende/Empfangseinheit 22, dem Betätigungselement 24 und dem Bewegungssensor 26 verbundene Steuereinheit 28. Die Steuereinheit 28 umfasst ein Abfragemittel 30 zur Abfrage des Ladezustands eines Energiespeichers 32 des Handsenders 20, bei welchem es sich um eine Batterie oder einen Akkumulator handeln kann. Für den Fall, dass der abgefragte Ladezustand des Energiespeichers 32 unterhalb eines vorbestimmten Schwellenwerts liegen sollte, ist ein Ausgabemittel 34 zur Ausgabe eines optischen und/oder akustischen Warnsignals an den Nutzer vorgesehen.

Der Handsender 20 kann wahlweise in einem manuellen Modus oder in einem Automatikmodus betrieben werden, wobei es sich bei dem manuellen Modus um die Werkseinstellung handelt.

Im manuellen Modus muss der Nutzer zur Entriegelung des Schlosses 10 das Betätigungselement 24 betätigen, d.h. also den Drucktaster drücken, und zwar für eine kurze Zeitdauer, die im Bereich von 20 ms bis 2 s liegt.

Diese kurze Betätigung des Betätigungselements 24 veranlasst die Abfrage des Ladezustands des Energiespeichers 32 durch das Abfragemittel 30 und gegebenenfalls die Ausgabe eines optischen und/oder akustischen Warnsignals durch das Ausgabemittel 34. Des Weiteren wird die Sende/Empfangseinheit 22 des Handsenders 20 durch die kurze Betätigung des Betätigungselements 24 dazu veranlasst, eine Bluetooth-Verbindung zu der Sende/Empfangseinheit 12 des Schlosses 10 aufzubauen. Sobald die Bluetooth-Verbindung zwischen dem Handsender 20 und dem Schloss 10 hergestellt ist, führt das Authentifizierungsmodul 14 des Schlosses 10 eine Authentifizierung des Handsenders 20 und somit des Nutzers durch, und bei erfolgreicher Nutzerauthentifizierung wird das Schloss 10 entriegelt.

Um den Handsender 20 in den Automatikmodus umzuschalten, muss der Nutzer das Betätigungselement 24 für einen längeren Zeitraum betätigen, d.h. also den Drucktaster für einen längeren Zeitraum gedrückt halten, wobei dieser längere Zeitraum beispielsweise im Bereich von 5 s bis 15 s liegen kann. Auch diese Betätigung des Betätigungselements 24 führt zu einer Abfrage des Ladezustands des Energiespeichers 32 durch das Abfragemittel 30. Liegt der abgefragte Ladezustands des Energiespeichers 32 unterhalb eines vorbestimmten Schwellenwerts, so wird eine Umschaltung in den Automatikmodus verhindert, d.h. der Handsender 20 bleibt im manuellen Modus. Verfügt der Energiespeicher 32 hingegen über ausreichend Energie, so schaltet der Handsender 20 in den Automatikmodus um.

Im Automatikmodus führt jede durch den Bewegungssensor 26 detektierte Bewegung des Handsenders 20 zu einer Abfrage des Ladezustands des Energiespeichers 32 durch das Abfragemittel 30. Es versteht sich, dass die Detektionsempfindlichkeit des Bewegungssensors 26 derart eingestellt ist, dass unnötige Abfragen des Ladezustands des Energiespeichers 32 vermieden werden, d.h. es sollen idealerweise nur relevante Bewegungen des Handsenders 20 zu einer Abfrage des Ladezustands führen, beispielsweise Bewegungen, die auftreten, wenn der Nutzer den Handsender 20 in seiner Hosentasche trägt und auf das Schloss 10 zugeht.

Stellt das Abfragemittel 30 fest, dass der Energiespeicher 32 über ausreichend Energie verfügt, so wird die Sende/Empfangseinheit 22 des Handsenders 20 veranlasst, eine Bluetooth-Verbindung zu der Sende/Empfangseinheit 12 des Schlosses 10 aufzubauen, damit das Authentifizierungsmodul 14 des Schlosses 10 wie voranstehend bereits beschrieben den Handsender 20 authentifizieren und im Falle einer erfolgreichen Authentifizierung das Schloss 10 entriegeln kann.

Stellt das Abfragemittel 30 hingegen fest, dass der abgefragte Ladezustand des Energiespeichers 32 unterhalb eines vorbestimmten Schwellenwerts liegt, so schaltet der Handsender 20 zur Schonung des Energiespeichers 32 in den manuellen Modus um, ohne dass eine Bluetooth-Verbindung zu dem Schloss 10 aufgebaut wurde. Für die Entriegelung des Schlosses 10 muss der Nutzer das Betätigungselement 24 wie voranstehend beschrieben nun also kurz betätigen.

Auch im Automatikmodus kann der Nutzer eine Entriegelung des Schlosses 10 bewusst befehlen, indem er das Betätigungselement 24 für die bereits erwähnte kurze Zeitdauer betätigt. Auch in diesem Fall fragt das Abfragemittel 30 zunächst den Ladezustand des Energiespeichers 32 ab. Ist ausreichend Energie vorhanden, so wird die Sende/Empfangseinheit 22 des Handsenders 20 dazu veranlasst, eine Bluetooth-Verbindung zu der Sende/Empfangseinheit 12 des Schlosses 10 aufzubauen, damit das Authentifizierungsmodul 14 des Schlosses 10 den Handsender 20 und damit den Nutzer authentifizieren und bei erfolgreicher Nutzerauthentifizierung das Schloss 10 entriegeln kann.

Stellt das Abfragemittel 30 hingegen fest, dass der abgefragte Ladezustand des Energiespeichers 32 unterhalb eines vorbestimmten Schwellenwerts liegt, so gibt das Ausgabemittel 34 ein optisches und/oder akustisches Warnsignal an den Nutzer aus, und der Handsender 20 schaltet in den manuellen Modus um, ohne das eine Bluetooth-Verbindung zu dem Schloss 10 aufgebaut wurde. Für eine Entriegelung des Schlosses 10 muss der Nutzer das Betätigungselement 24 in diesem Fall also nochmals kurz betätigen, sobald der Handsender 20 seinen manuellen Modus eingenommen hat.

### Bezugszeichenliste

- 10: Schloss
- 12: Sende/Empfangseinheit
- 14: Authentifizierungsmodul
- 16: Elektromotor
- 20: Handsender
- 22: Sende/Empfangseinheit
- 24: Betätigungselement
- 26: Bewegungssensor
- 28: Steuereinheit
- 30: Abfragemittel
- 32: Energiespeicher
- 34: Ausgabemittel

## Patentansprüche

1. Handsender (20) mit einem Energiespeicher (32), einem Bewegungssensor (26) zur Detektion einer Bewegung des Handsenders (20), einer Sende/Empfangseinheit (22) zum Aufbauen einer drahtlosen Verbindung zu einem elektrisch betätigbaren mobilen Schloss (10) und einem Abfragemittel (30) zur Abfrage des Ladezustands des Energiespeichers (32), wobei der Handsender (20) zwischen einem manuellen Modus, in welchem der Verbindungsaufbau nur durch die Betätigung eines Betätigungselements (24) durch einen Nutzer auslösbar ist, und einem Automatikmodus umschaltbar ist, in welchem der Verbindungsaufbau durch eine Bewegung des Handsenders (20) auslösbar ist,
**dadurch gekennzeichnet, dass**
bei einer gewünschten Umschaltung aus dem manuellen Modus in den Automatikmodus eine Abfrage des Ladezustands des Energiespeichers (32) vorgesehen ist und im Falle eines unzureichenden Ladezustands eine Umschaltung in den Automatikmodus verhindert wird.

2. Handsender (20) nach Anspruch 1,
**dadurch gekennzeichnet, dass**
ein Umschaltelement zum Umschalten zwischen dem manuellen Modus und dem Automatikmodus vorgesehen ist, insbesondere wobei das Umschaltelement durch das Betätigungselement (24) gebildet ist.

3. Handsender (20) nach Anspruch 2,
**dadurch gekennzeichnet, dass**
die Umschaltung aus dem manuellen Modus in den Automatikmodus durch eine Betätigung des Betätigungselements (24) für eine erste vorbestimmte Zeitdauer bewirkbar ist.

4. Handsender (20) nach Anspruch 2 oder 3,
**dadurch gekennzeichnet, dass**
die Umschaltung aus dem Automatikmodus in den manuellen Modus durch eine Betätigung des Betätigungselements (24) für eine zweite vorbestimmte Zeitdauer bewirkbar ist.

5. Handsender (20) nach Anspruch 3 und 4,
**dadurch gekennzeichnet, dass**
die erste und die zweite vorbestimmte Zeitdauer jeweils im Bereich von 5 s bis 15 s liegen und insbesondere gleich groß sind.

6. Handsender (20) nach zumindest einem der vorstehenden Ansprüche, **gekennzeichnet durch**
ein Ausgabemittel (34) zur Ausgabe eines optischen und/oder akustischen Signals im Falle eines unzureichenden Ladezustands.

7. Handsender (20) nach zumindest einem der vorstehenden Ansprüche, **dadurch gekennzeichnet, dass**
bei Detektion einer Bewegung des im Automatikmodus befindlichen Handsenders eine Abfrage des Ladezustands des Energiespeichers (32) und im Falle eines unzureichenden Ladezustands eine Umschaltung in den manuellen Modus vorgesehen ist, insbesondere ohne dass eine Verbindung zu dem Schloss (10) aufgebaut wird.

8. Handsender (20) nach zumindest einem der vorstehenden Ansprüche, **dadurch gekennzeichnet, dass** auch im Automatikmodus durch eine Betätigung des Betätigungselements (24) der Aufbau einer Verbindung zu dem Schloss (10) auslösbar ist.

9. Handsender (20) nach Anspruch 8,
**dadurch gekennzeichnet, dass**
der Verbindungsaufbau durch eine Betätigung des Betätigungselements (24) für eine dritte vorbestimmte Zeitdauer bewirkbar ist, insbesondere wobei die dritte vorbestimmte Zeitdauer kleiner als eine erste oder zweite vorbestimmte Zeitdauer ist, für die das Betätigungselement (24) betätigt werden muss, um zwischen dem manuellen Modus und dem Automatikmodus umzuschalten, wobei die dritte vorbestimmte Zeitdauer bevorzugt im Bereich von 20 ms bis 2 s liegt.

10. Handsender (20) nach Anspruch 9,
**dadurch gekennzeichnet, dass**
bei einer Betätigung des Betätigungselements (24) im Automatikmodus für die dritte vorbestimmte Zeitdauer eine Abfrage des Ladezustands des Energiespeichers (32) vorgesehen ist und im Falle eines unzureichenden Ladezustands in den manuellen Modus umgeschaltet wird, insbesondere ohne dass eine Verbindung zu dem Schloss (10) aufgebaut wird.

11. Handsender (20) nach zumindest einem der vorstehenden Ansprüche, **dadurch gekennzeichnet, dass**
die Verbindung eine Bluetooth-Verbindung ist.

12. Handsender (20) nach zumindest einem der vorstehenden Ansprüche, **dadurch gekennzeichnet, dass**
das Betätigungselement (24) ein Taster, insbesondere ein Druck- oder Schiebetaster ist.

13. Schließsystem umfassend einen Handsender (20) nach einem der vorherigen Ansprüche und ein elektrisch betätigbares mobiles Schloss (10), welches eine Sende/Empfangseinheit (12) aufweist, die den Aufbau einer drahtlosen Verbindung zwischen dem Schloss (10) und dem Handsender (20) ermöglicht.

14. Verfahren zum Entriegeln eines elektrisch betätigbaren mobilen Schlosses (10), mittels eines Handsenders (20) nach einem der vorherigen Ansprüche, bei welchem Verfahren
der Handsender (20) in einen manuellen Modus geschaltet wird, in welchem der Aufbau einer drahtlosen Verbindung zwischen dem Handsender (20) und dem Schloss (10) durch die Betätigung eines Betätigungselements (24) des Handsenders durch einen Nutzer ausgelöst wird, oder
der Handsender (20) in einen Automatikmodus geschaltet wird, in welchem der Aufbau einer drahtlosen Verbindung zwischen dem Handsender (20) und dem Schloss (10) durch die Detektion einer Bewegung des Handsenders durch einen Bewegungssensor (26) des Handsenders ausgelöst wird,
**dadurch gekennzeichnet, dass**
bei einer gewünschten Umschaltung aus dem manuellen Modus in den Automatikmodus der Ladezustand eines Energiespeichers (32) abgefragt wird und im Falle eines unzureichenden Ladezustands eine Umschaltung in den Automatikmodus verhindert wird.

## Claims

1. A handheld transmitter (20) comprising an energy store (32), a motion sensor (26) for detecting a movement of the handheld transmitter (20), a transmission/reception unit (22) for establishing a wireless connection to an electrically actuable portable lock (10), and a querying means (30) for querying the charge state of the energy store (32), wherein the handheld transmitter (20) can be switched over between a manual mode in which the connection establishment can only be triggered by the actuation of an actuation element (24) by a user and an automatic mode in which the connection establishment can be triggered by a movement of the handheld transmitter (20),
**characterized in that**
a querying of the charge state of the energy store (32) is provided on a desired switchover from the manual mode into the automatic mode; and **in that** a switchover into the automatic mode is prevented in the case of an insufficient charge state.

2. A handheld transmitter (20) in accordance with claim 1,
**characterized in that**
a switchover element is provided for switching over between the manual mode and the automatic mode, in particular with the switchover element being formed by the actuation element (24).

3. A handheld transmitter (20) in accordance with claim 2,
**characterized in that**
the switchover from the manual mode into the automatic mode can be effected by an actuation of the actuation element (24) for a first predefined period of time.

4. A handheld transmitter (20) in accordance with claim 2 or claim 3, **characterized in that**
the switchover from the automatic mode into the manual mode can be effected by an actuation of the actuation element (24) for a second predefined period of time.

5. A handheld transmitter (20) in accordance with claim 3 or claim 4, **characterized in that**
the first and second predefined periods of time are each in the range from 5 s to 15 s and are in particular equal.

6. A handheld transmitter (20) in accordance with at least one of the preceding claims,
**characterized by**
an output means (34) for outputting a visual and/or acoustic signal in the event of an insufficient charge state.

7. A handheld transmitter (20) in accordance with at least one of the preceding claims,
**characterized in that**
a querying of the charge state of the energy store (32) and, in the case of an insufficient charge state, a switchover into the manual mode are provided on detection of a movement of the handheld transmitter in the automatic mode, in particular without a connection to the lock (10) being established.

8. A handheld transmitter (20) in accordance with at least one of the preceding claims,
**characterized in that**
the establishment of a connection to the lock (10) can also be triggered in the automatic mode by an actuation of the actuation element (24).

9. A handheld transmitter (20) in accordance with claim 8,
**characterized in that**
the connection establishment can be effected by an actuation of the actuation element (24) for a third predefined period of time, in particular with the third predefined period of time being smaller than a first or second predefined period of time for which the actuation element (24) has to be actuated to switch over between the manual mode and the automatic mode, with the third predefined period of time preferably being in the range from 20 ms to 2 s.

10. A handheld transmitter (20) in accordance with claim 9,
**characterized in that**,
on an actuation of the actuation element (24) for the third predefined period of time in the automatic mode, a querying of the charge state of the energy store (32) is provided and, in the event of an insufficient charge state, a switchover is made into the manual mode, in particular without a connection to the lock (10) being established.

11. A handheld transmitter (20) in accordance with at least one of the preceding claims,
**characterized in that**
the connection is a Bluetooth connection.

12. A handheld transmitter (20) in accordance with at least one of the preceding claims,
**characterized in that**
the actuation element (24) is a push button, in particular a press button or a slide button.

13. A locking system comprising a handheld transmitter (20) in accordance with any one of the preceding claims and an electrically actuable portable lock (10) which has a transmission/reception unit (12) that enables the establishment of a wireless connection between the lock (10) and the handheld transmitter (20).

14. A method of unlocking an electrically actuable portable lock (10) by means of a handheld transmitter (20) in accordance with any one of the preceding claims, in which method
the handheld transmitter (20) is switched into a manual mode in which the establishment of a wireless connection between the handheld transmitter (20) and the lock (10) is triggered by the actuation of an actuation element (24) of the handheld transmitter (20) by a user; or
the handheld transmitter (20) is switched into an automatic mode in which the establishment of a wireless connection between the handheld transmitter (20) and the lock (10) is triggered by the detection of a movement of the handheld transmitter by a motion sensor (26) of the handheld transmitter,
**characterized in that**
the charge state of an energy store (32) is queried on a desired switchover from the manual mode into the automatic mode and a switchover into the automatic mode is prevented in the case of an insufficient charge state.

## Revendications

1. Emetteur portatif (20) comportant un accumulateur d'énergie (32), un capteur de mouvement (26) destiné à détecter un mouvement de l'émetteur portatif (20), une unité d'émission/réception (22) destinée à établir une liaison sans fil avec une serrure mobile (10) à commande électrique, et un moyen d'interrogation (30) destiné à interroger l'état de charge de l'accumulateur d'énergie (32), l'émetteur portatif (20) pouvant être commuté entre un mode manuel, dans lequel l'établissement de la liaison ne peut être déclenché que par l'actionnement d'un élément d'actionnement (24) par un utilisateur, et un mode automatique, dans lequel l'établissement de la liaison peut être déclenché par un mouvement de l'émetteur portatif (20),
**caractérisé en ce que**
lors d'une commutation souhaitée du mode manuel au mode automatique, il est prévu une interrogation de l'état de charge de l'accumulateur d'énergie (32) et, en cas d'état de charge insuffisant, une commutation dans le mode automatique est empêchée.

2. Émetteur portatif (20) selon la revendication 1,
**caractérisé en ce que**
il est prévu un élément de commutation destiné à commuter entre le mode manuel et le mode automatique, en particulier l'élément de commutation étant formé par l'élément d'actionnement (24).

3. Émetteur portatif (20) selon la revendication 2,
**caractérisé en ce que**
la commutation du mode manuel au mode automatique peut être provoquée par un actionnement de l'élément d'actionnement (24) pendant une première durée prédéterminée.

4. Émetteur portatif (20) selon la revendication 2 ou 3,
**caractérisé en ce que**
la commutation du mode automatique au mode manuel peut être provoquée par un actionnement de l'élément d'actionnement (24) pendant une deuxième durée prédéterminée.

5. Émetteur portatif (20) selon la revendication 3 ou 4,
**caractérisé en ce que**
la première et la deuxième durée prédéterminée se situent chacune dans la plage de 5 s à 15 s et sont en particulier de même valeur.

6. Émetteur portatif (20) selon l'une au moins des revendications précédentes, **caractérisé par**
un moyen d'émission (34) destiné à émettre un signal visuel et/ou sonore en cas d'état de charge insuffisant.

7. Émetteur portatif (20) selon l'une des revendications précédentes, **caractérisé en ce que**
en cas de détection d'un mouvement de l'émetteur portatif se trouvant en mode automatique, il est prévu une interrogation de l'état de charge de l'accumulateur d'énergie (32) et, en cas d'état de charge insuffisant, il est prévu une commutation dans le mode manuel, en particulier sans qu'une liaison avec la serrure (10) soit établie.

8. Émetteur portatif (20) selon l'une au moins des revendications précédentes, **caractérisé en ce que**
l'établissement d'une liaison avec la serrure (10) peut être déclenché également en mode automatique par un actionnement de l'élément d'actionnement (24).

9. Émetteur portatif (20) selon la revendication 8,
**caractérisé en ce que**
l'établissement de la liaison peut être provoqué par un actionnement de l'élément d'actionnement (24) pendant une troisième durée prédéterminée, en particulier la troisième durée prédéterminée étant inférieure à une première ou une deuxième durée prédéterminée pendant laquelle l'élément d'actionnement (24) doit être actionné afin de commuter entre le mode manuel et le mode automatique, la troisième durée prédéterminée étant de préférence comprise dans la plage de 20 ms à 2 s.

10. Émetteur portatif (20) selon la revendication 9,
**caractérisé en ce que**
lors d'un actionnement de l'élément d'actionnement (24) en mode automatique pendant la troisième durée prédéterminée, il est prévu une interrogation de l'état de charge de l'accumulateur d'énergie (32) et, en cas d'état de charge insuffisant, une commutation dans le mode manuel est effectuée, en particulier sans qu'une liaison avec la serrure (10) soit établie.

11. Émetteur portatif (20) selon l'une au moins des revendications précédentes, **caractérisé en ce que**
la liaison est une liaison Bluetooth.

12. Émetteur portatif (20) selon l'une au moins des revendications précédentes, **caractérisé en ce que**
l'élément d'actionnement (24) est un bouton, en particulier un bouton-poussoir ou un bouton coulissant.

13. Système de fermeture comprenant un émetteur portatif (20) selon l'une des revendications précédentes et une serrure mobile (10) à commande électrique, qui comprend une unité d'émission/réception (12) permettant d'établir une liaison sans fil entre la serrure (10) et l'émetteur portatif (20).

14. Procédé de déverrouillage d'une serrure mobile (10) à commande électrique au moyen d'un émetteur portatif (20) selon l'une des revendications précédentes, procédé dans lequel
l'émetteur portatif (20) est commuté dans un mode manuel dans lequel l'établissement d'une liaison sans fil entre l'émetteur portatif (20) et la serrure (10) est déclenché par l'actionnement d'un élément d'actionnement (24) de l'émetteur portatif par un utilisateur, ou
l'émetteur portatif (20) est commuté dans un mode automatique dans lequel l'établissement d'une liaison sans fil entre l'émetteur portatif (20) et la serrure (10) est déclenché par la détection d'un mouvement de l'émetteur portatif par un capteur de mouvement (26) de l'émetteur portatif,
**caractérisé en ce que**
lors d'une commutation souhaitée du mode manuel au mode automatique, l'état de charge de l'accumulateur d'énergie (32) est interrogé et, en cas d'état de charge insuffisant, une commutation dans le mode automatique est empêchée.
